# EUROPEAN PATENT APPLICATION

(11) **EP 4 838 759 A1**
(43) Date of publication of application: **11.11.2026**
(21) Application number: 25305656.8
(22) Date of filing: 07.05.2025
(51) Int. Cl.: H02K 1/2798, H02K 15/035, H02K 21/24

(54) **A ROTOR FOR AN ELECTRIC AXIAL FLUX MOTOR WITH IMPROVED RETENTION MEANS**

(71) Applicant: TOYOTA JIDOSHA KABUSHIKI KAISHA, Toyota-shi, Aichi-ken 471-8571 (JP)
(72) Inventor: SCHUERMANS, Raf, 1140 BRUSSELS (BE); LEMATTRE, Louis, 1140 BRUSSELS (BE); LIXFE, Laurène, 1140 BRUSSELS (BE)
(74) Representative: Cabinet Beau de Loménie

(57) **Abstract**

A rotor (R) for an electric axial flux motor (1), the rotor (R) being adapted to rotate around a longitudinal axis (X) defining a longitudinal direction, and comprising a plurality of permanent magnets (20), a magnet support (10) supporting the permanent magnets (20) and comprising a main base plate (12) and a plurality of magnet pockets (30) disposed on an axial face (12a) of the main base plate (12), each of the magnet pockets (30) holding one of the permanent magnets (20) and comprising a plurality of bracket portions (31, 32, 33, 34), wherein each of the bracket portions (31, 32, 33, 34) are formed by a cut and bent portion of the main base plate (12) itself.

## Description

### BACKGROUND OF THE INVENTION

### 1. Field of the invention

The present disclosure relates to a rotor for an electric axial flux motor which comprises an improved retention means for the permanent magnets.

### 2. Description of Related Art

The increasing demand for electric vehicles has led to the development of various technologies for electric motors. For instance, electric motors include radial flux motors or axial flux motors using permanent magnets. In radial flux motors, a rotor rotates inside or around a stator. In axial flux motors, the stator and the rotor face each other.

In these electric motors, the permanent magnets are typically fixed to rotor by means of adhesive, resin or glue, for example. Although these fixation means ensure a strong magnet retention, they have the drawbacks that they are not adapted for recycling, as removing the permanent magnets at the end of the motor's life is difficult, and the adhesive itself may not be good for the environment.

To remedy this issue, known solutions consist of using mechanical ways to hold the magnets instead of using permanent glue. These mechanical retentions include frictional forces, interlock or mechanical fasteners, for instance.

However, such solutions have the drawbacks that they may involve additional pieces and/or additional burden of work at the time of conception and fabrication for providing mechanical retention for the magnets, this additional work including machining of the rotor for example.

In addition, these existing solutions involve thick structures of the rotor to allow appropriate mechanical retention of the magnets. These thick structures involve excessive mass of the motor and the necessity of machining them involves a waste of materials and a bad energetic footprint accordingly.

### SUMMARY

The object of the present invention is to at least substantially remedy the above-mentioned drawbacks.

In this respect, the present disclosure relates to a rotor for an electric axial flux motor, the rotor being adapted to rotate around a longitudinal axis defining a longitudinal direction, and comprising:
- a plurality of permanent magnets,
- a magnet support supporting the permanent magnets and comprising a main base plate and a plurality of magnet pockets disposed on an axial face of the main base plate, each of the magnet pockets holding one of the permanent magnets and comprising a plurality of bracket portions,
wherein each of the bracket portions are formed by a cut and bent portion of the main base plate itself.

In the present disclosure, since the bracket portions are formed by a cut and bent portion of the main base plate itself, no machining is necessary for forming the magnet pockets supporting the permanent magnets. Also, no additional pieces are necessary. This allows saving production energy, making the rotor lighter, and therefore, making the total energetic footprint lower, in other words better.

In an example embodiment, the magnet support, including the bracket portions, does not include any machining-obtained portion

In an example embodiment, at least one cut and bent portion of the main base plate, forming one of the bracket portions, includes a stamped portion forming an elongated protrusion cooperating with a groove formed on a face of a corresponding one of the permanent magnets.

In an example embodiment, each of the magnet pockets comprises three bracket portions.

In an example embodiment, the three bracket portions include one radially outer bracket portion disposed on an outer radial end side of a corresponding one of the permanent magnets, and two circumferential bracket portions disposed on both circumferential end sides of said corresponding one of the permanent magnets.

In an example embodiment, the radially outer bracket portion includes a stamped portion forming an elongated protrusion cooperating with a groove formed on an outer radial end side of the corresponding one of the permanent magnets, wherein the stamped portion of the radially outer bracket portions forms the elongated protrusion on an internal face of the radially outer bracket portions, and a corresponding elongated groove on an opposite external face of the radially outer bracket portions.

In an example embodiment, each of the magnet pockets comprises four bracket portions.

In an example embodiment, the four bracket portions include two radial bracket portions disposed on both radial end sides of a corresponding one of the permanent magnets, and two circumferential bracket portions disposed on both circumferential end sides of said corresponding one of the permanent magnets.

In an example embodiment, each of the two radial bracket portions includes a stamped portion forming an elongated protrusion cooperating with a groove formed on both radial end sides of the corresponding one of the permanent magnets.

In an example embodiment, the rotor comprises at least one retention wire surrounding all the magnet pockets.

In an example embodiment, the stamped portion of each of the two radial bracket portions forms the elongated protrusion on an internal face of each of the two radial bracket portions, and a corresponding elongated groove on an opposite external face of each of the two radial bracket portions.

In an example embodiment, the at least one retention wire sits in the elongated groove formed on the external face of the outermost of the two radial bracket portions of each of the magnet pockets.

In an example embodiment, the rotor comprises a plurality of retention wires, each of the retention wires surrounding a corresponding one of the magnet pockets by sitting in the elongated groove formed on the external face of both two radial bracket portions.

In an example embodiment, an axial end of at least one of the bracket portions comprises an axial retention shoulder cooperating with a slot of a corresponding one of the permanent magnets.

In an example embodiment, the magnet support is obtained from a disk-shaped thin sheet of steel.

The present invention also relates to an electric axial flux motor comprising a stator and at least one rotor according to any one of the preceding example embodiments, the at least one rotor facing the stator in the longitudinal direction.

The present invention also relates to a method for forming a rotor for an axial flux machine, the method comprising: -providing a raw magnet support, - forming magnet pockets by cutting portions of the raw magnet support, and bending said cut portions to form a plurality of bracket portions forming the magnet pockets, the remaining part of the obtained magnet support forming a main base plate,
- disposing a plurality of permanent magnets on an axial face of the main base plate by fitting each of the permanent magnets in a corresponding one of the magnet pockets.

In an example embodiment, the method comprises stamping a portion of at least one of the cut and bent portions so as to form an elongated protrusion cooperating with a groove formed on a face of a corresponding one of the permanent magnets

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
- FIG. 1 is a sectional axial view of an electrical axial flux motor according to the priori art;
- FIG. 2 is a front view of a rotor of the electrical axial flux motor of figure 1;
- FIG. 3 is a partial perspective view of a rotor of the present invention;
- FIG. 4 is a detailed view of a magnet pocket of the rotor of figure 2, holding a permanent magnet;
- FIG. 5 is a partial detailed view of a bracket portion of the magnet pocket of figure 4;
- FIG. 6 is a perspective view of a permanent magnet of the rotor of the present invention;
- FIG. 7 is a partial detailed view of a portion of the magnet pocket of figure 6;
- FIG. 8 is a partial detailed view of an assembly of the bracket portion of figure 5 and the permanent magnet of figure 7;
- FIG. 9 is a sectional view of the rotor in a plane parallel to the longitudinal direction and to the radial direction, according to a first example of the invention;
- FIG. 10 is a sectional view of the rotor in a plane parallel to the longitudinal direction and to the radial direction, according to a second example of the invention;
- FIG. 11 is a partial perspective view of a raw magnet support in a first step of a method for forming the rotor of the present invention;
- FIG. 12 is a partial perspective view of a magnet support in a subsequent step of the method for forming the rotor of the present invention;
- FIG. 13 is a partial perspective view showing the insertion of a permanent magnet on the magnet support in a further subsequent step of the method for forming the rotor of the present invention;
- FIG. 14 is a sectional view of the rotor in a plane parallel to the longitudinal direction and to the radial direction showing the insertion of a permanent magnet on the magnet support.

### DETAILED DESCRIPTION OF EMBODIMENTS

Embodiments of the present invention will be described in reference to the drawings.

In the remaining of the description, a longitudinal axis X is the main axis of the electric motor around which the rotor rotates. The longitudinal axis X defines a longitudinal direction X (in the description, the expressions "longitudinal axis" and "longitudinal direction" are thus considered equivalent). A radial direction Z is a direction which is perpendicular to the longitudinal axis X and along which extends the radius of the rotor, and a circumferential (or transversal) direction Y is a direction perpendicular to the longitudinal axis X and to the radial axis Z. Thus, the term "axially" and its derivatives refer to the longitudinal axis X, the term "radially" and its derivatives refer to the radial direction Z, and the term "circumferentially" and its derivatives refer to the circumferential direction Y.

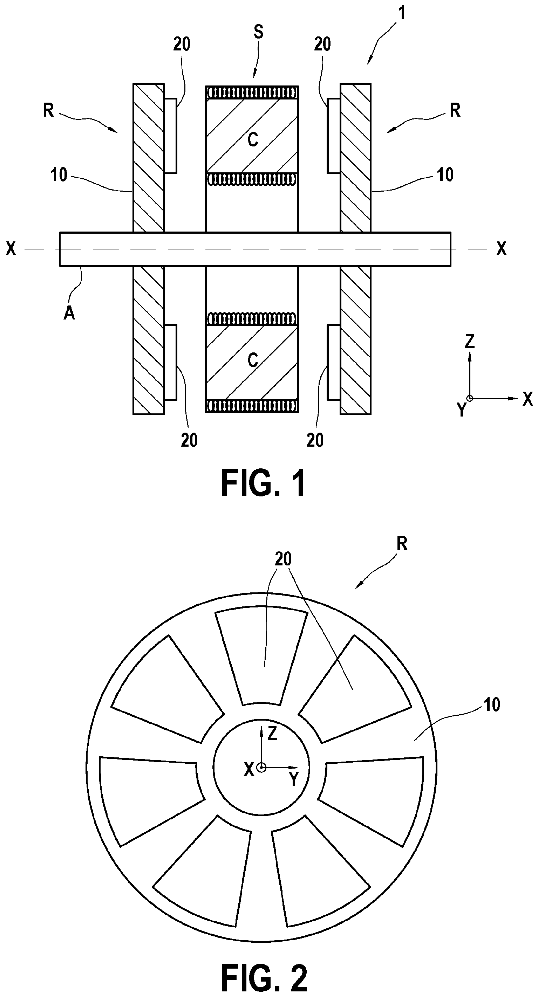

Figure 1 presents a lateral view, perpendicular to the longitudinal axis X, of an example of a known electrical axial flux motor 1 which comprises a stator S and at least one rotor R, in this example two rotors R, arranged axially on both sides of the stator S. The rotors R are attached to a rotatable rotor shaft A, and are thus adapted to rotate around a longitudinal axis X with respect to the stator S.

Each rotor R comprises a magnet support 10 having the shape of a circular disk extending around the longitudinal axis X, and a plurality of permanent magnets 20 fixed on an axial face of the magnet support 10, facing the stator S. Typically, the permanent magnets 20 faces copper windings C of the stator S. The structure of the stator S will not be described in more details in the present disclosure.

Figure 2 presents a face view, parallel to the longitudinal axis X, of a known rotor R. As illustrated, the permanent magnets 20 are distributed circumferentially on the magnet support 10, around the longitudinal axis X. Typically, each permanent magnet 20 has a shape which is radially flared outwards.

In the known example illustrated in Figures 1 and 2, the permanent magnets 20 are fixed to the magnet support 10 by a glue or any adhesives.

On the other hand, in the rotor R according to the present disclosure, the permanent magnets 20 are fixed to the magnet support 10 as follows. Except the fixation means of the permanent magnets 20 on the magnet support 10, the other features of the electric axial flux motor 1 described above also apply to the electric axial flux motor 1 of the present disclosure.

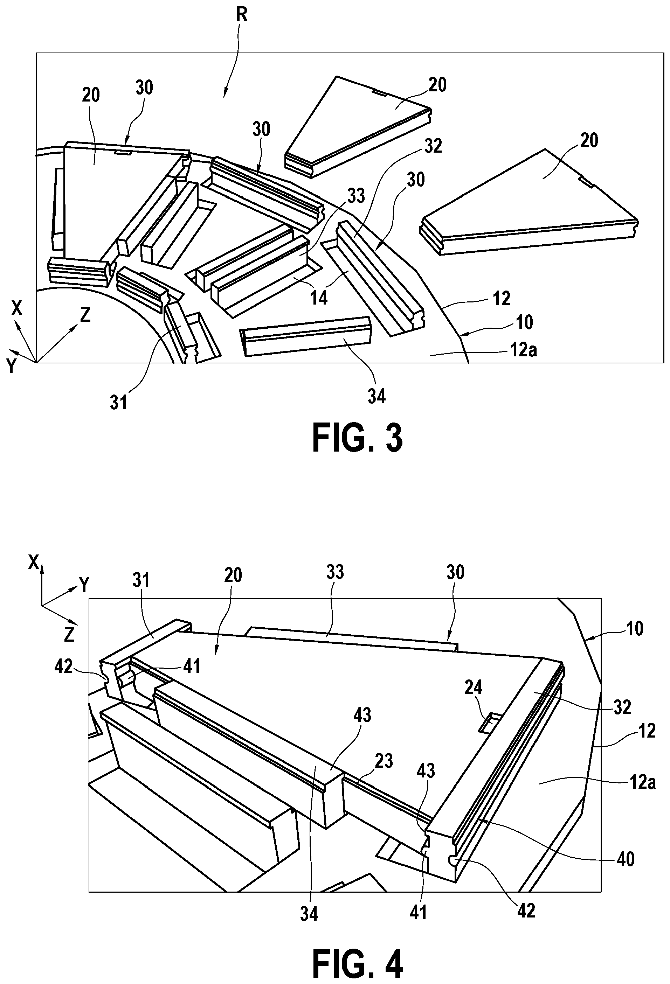

In the rotor R of the present disclosure, the permanent magnet 20 are mechanically fixed to the magnet support 10. Figure 3 presents a perspective view of a portion of the magnet support 10. The magnet support 10 comprises a main base plate 12, and a plurality of magnet pockets 30 (three of them are visible in figure 3) disposed on an axial face 12a of the main base plate 12.

Each of the magnet pockets 30 supports and holds one of the permanent magnets 20 and comprises a plurality of bracket portions. It is noted that in figure 3, one of the three visible magnet pockets 30 supports and holds a permanent magnet 20, and the two other magnet pockets 30 are shown "empty", just before insertion of the permanent magnets 20 which are illustrated near said magnet pockets 30 in figure 3.

Figure 4 presents a detailed view of one magnet pocket 30 in perspective. In this example, each magnet pocket 30 comprises four bracket portions 31, 32, 33, 34. More specifically, each magnet pocket 30 comprises two radial bracket portions 31, 32, namely a radially inner bracket portion 31 and a radially outer bracket portion 32, and two circumferential bracket portions 33, 34.

It is noted that although the example of the magnet pocket 30 described below includes four bracket portions 31, 32, 33, 34, the invention is not limited to this. In particular, each magnet pocket 30 may not include the radially inner bracket portion 31, which does not take up any centrifugal force contrary to the radially outer bracket portion 32, and may thus include only three bracket portions 32, 33, 34. This makes the design simpler, decreases the number of steps in the process of forming the rotor R, and it makes the center portion of the rotor R mechanically more robust.

In the present example, the two radial bracket portions 31, 32 aim to hold the radial ends of the permanent magnet 20, and the two circumferential bracket portions 33, 34 aim to hold the circumferential ends of the permanent magnet 20.

The bracket portions 31, 32, 33, 34 are walls having the shape of a tong protruding axially from the axial surface 12a of the main base plate 12 towards the stator S (not visible on figures 3 and 4). In fact, the bracket portions 31, 32, 33, 34 are portions of the main base plate 12 itself, which have been cut and bent.

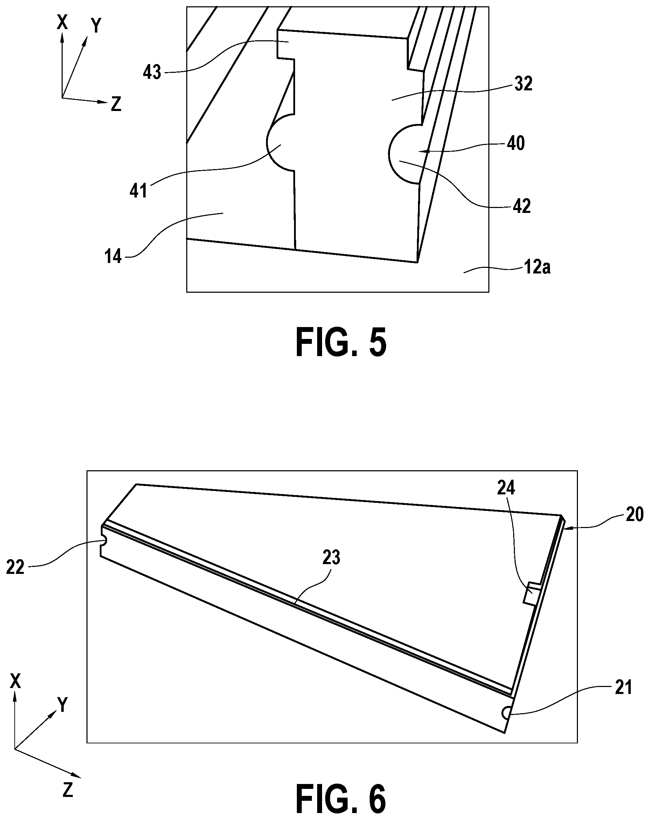

Furthermore, at least one of the bracket portions 31, 32, 33, 34 includes a stamped portion 40. In the present example of embodiment, both the radial bracket portions 31, 32 include a stamped portion 40. Figure 5 presents a detailed view, in perspective, of a side portion of the radially outer bracket portion 32. The stamped portion 40 is made for example by cold pressing manufacturing process and forms an elongated protrusion 41 aiming to cooperate with a corresponding groove 21 formed on a face of the permanent magnet 20.

More specifically, the stamped portion 40 is obtained by stamping an external face of the radially outer bracket portion 32, so that the resulting elongated protrusion 41 protrudes from an internal face of the radially outer bracket portion 32 towards an inside of the magnet pocket 30 into which the permanent magnet 20 must be inserted. The same applies to the radially inner bracket portion 31. It is thus understood that the stamped portion 40 comprises a corresponding elongated groove 42, resulting from the stamping operation, on the opposite external face of each of the two radial bracket portions 31, 32.

Preferably, the stamped portions 40 extend along the whole length of the radial bracket portions 31, 32, in the circumferential direction Y.

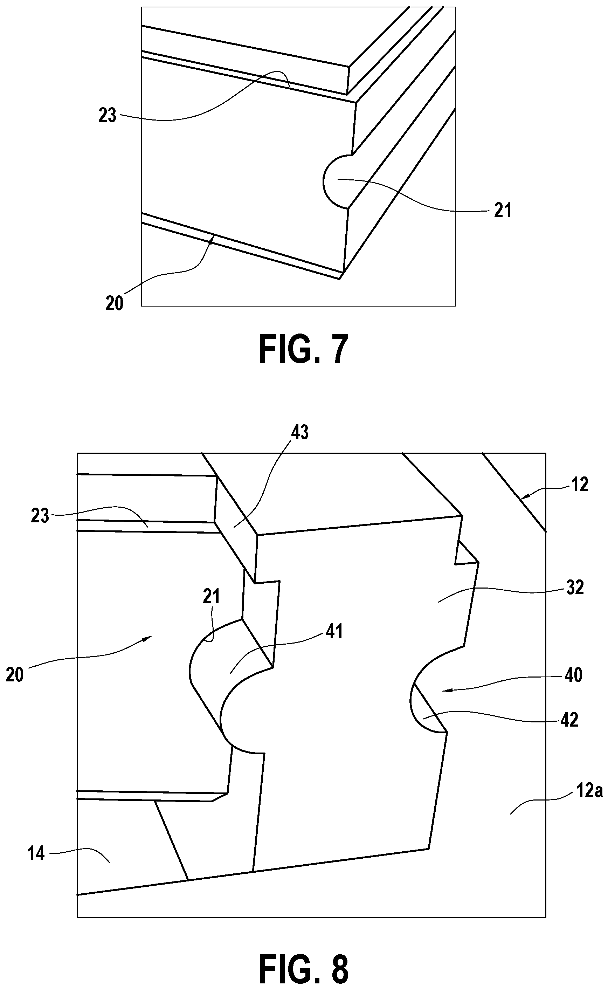

Figure 6 presents a perspective view of a permanent magnet 20, and figure 7 is a detailed view of said permanent magnet 20, at an outer radial end thereof. The radially outer face of the permanent magnet 20 comprises a first groove 21 aiming to cooperate with the elongated protrusion 41 of the stamped portion 40 of the radially outer bracket portion 32.

In the same manner, the radially inner face of the permanent magnet 20 comprises a second groove 22 aiming to cooperate with the elongated protrusion 41 of the stamped portion 40 of the radially inner bracket portion 31.

Preferably, the first groove 21 extends along the whole length of the radially outer face of the permanent magnet 20 in the circumferential direction Y, and the second groove 22 extends along the whole length of the radially inner face of the permanent magnet 20 in the circumferential direction Y.

Figure 8 presents a perspective detailed view of the lateral end side of the radially outer bracket portion 32 when the permanent magnet 20 is inserted in the magnet pocket 30. As can be seen, the elongated protrusion 41 of the stamp portion 40 matches the first groove 21 of the permanent magnet 20. The cooperation between the elongated protrusions 41 and the grooves 21, 22 allows improving the axial holding of the permanent magnet 20 in the corresponding magnet pocket 30.

Preferably, each of the bracket portions 31, 32, 33, 34 may also include an axial retention shoulder 43 extending along an upper axial end of said bracket portions 31, 32, 33, 34. These axial retention shoulders 43 may also be formed by cold deformation (cold upsetting), for example by pushing the external face of each of the bracket portions 31, 32, 33, 34 so that said axial retention shoulder 43 protrudes inwardly towards the inside of the magnet pocket 30.

Each of the axial retention shoulders 43 cooperates with a slot 23 of the permanent magnet 20, as shown in figures 4 and 8. In this respect, the slot 23 is preferably formed along each ridge of the upper axial end of the permanent magnet 20, as shown in figure 6 for example.

The cooperation between the axial retention shoulders 43 and the slot 23 allows further improving axial holding of the permanent magnet 20 in the corresponding magnet pocket 30.

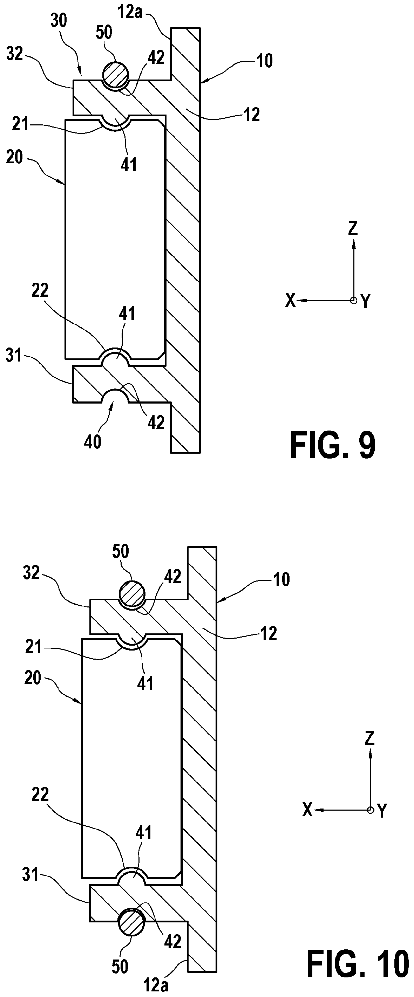

Preferably, the rotor R comprises at least one retention wire 50 surrounding the magnet pockets 30. In a first preferred example of the embodiment illustrated in figure 9, the rotor R comprises only one retention wire 50. Figure 9 presents a cut view of the rotor R, in a plan parallel to the longitudinal direction X and to the radial direction Z and crossing the radially inner bracket portion 31 and the radially outer bracket portion 32 of one magnet pocket 30.

In this first example, the retention wire 50 sits in the elongated groove 42 formed on the external face of the radially outer bracket portion 32 of each of the magnet pockets 30 (although only one magnet pocket 30 and radially outer bracket portion 32 are visible in figure 9). In other words, the retention wire 50 surrounds the whole circumference of the magnet support 10 by being matched in the elongated grooves 42 of each of the radially outer bracket portions 32.

Therefore, the stamped portions 40 not only allow forming the elongated protrusions 41 to be matched with the grooves 21 of the permanent magnets 20, but also allow using the elongated grooves 42, formed during the stamping process, as retaining means for the retention wire 50, allowing to efficiently retain said retention wire 50 in its axial position.

The retention wire 50 can thus be firmly wound around the magnet pockets 30, thus allowing efficient radial retention of the permanent magnets 20 to prevent them from radially moving due to centrifugal forces during rotation of the rotor R. In other words, the single retention wire 50 keeps together the centrifugal forces of the entire system. In addition, using only one retention wire 50 for the whole support magnet 10 allows limiting the number of pieces and simplifying the assembly accordingly.

In a second example of the embodiment illustrated in figure 10, the rotor R comprises a plurality of retention wires 50, more specifically one retention wire 50 for each magnet pocket 30. Figure 10 presents a cut view of the rotor R, in a plan parallel to the longitudinal direction X and to the radial direction Z and crossing the radially inner bracket portion 31 and the radially outer bracket portion 32 of one magnet pocket 30.

In this second example, for each of the magnet pockets 30 (although only one magnet pocket 30 is visible in figure 10), the retention wire 50 sits in the elongated grooves 42 formed on the external face of the radially outer bracket portion 32 and on the external face of the radially inner bracket portion 31. In other words, each retention wire 50 surrounds one magnet pocket 30 (including the four bracket portions 31, 32, 33, 34) by being matched in the elongated grooves 42 of the radially inner bracket portion 31 and of the radially outer bracket portion 32.

For each of the first or second example, the retention wire(s) 50 may be made of steel, carbon or fiber. Such a retention wire 50 is simpler and lighter than a mechanical ring usually used for radial retention.

Preferably, an axial upper face of each permanent magnet 20 may include a prehension recess 24. For instance, as illustrated in figures 4 and 6 for example, the prehension recess 24 may be positioned along the radially outer edge of the permanent magnet 20.

The prehension recess 24 allows inserting a tool under the axial retention shoulder 43 of the radially outer bracket portion 32 for bending it, and thus easily removes the permanent magnet 20 at the end of lifetime of the motor 1.

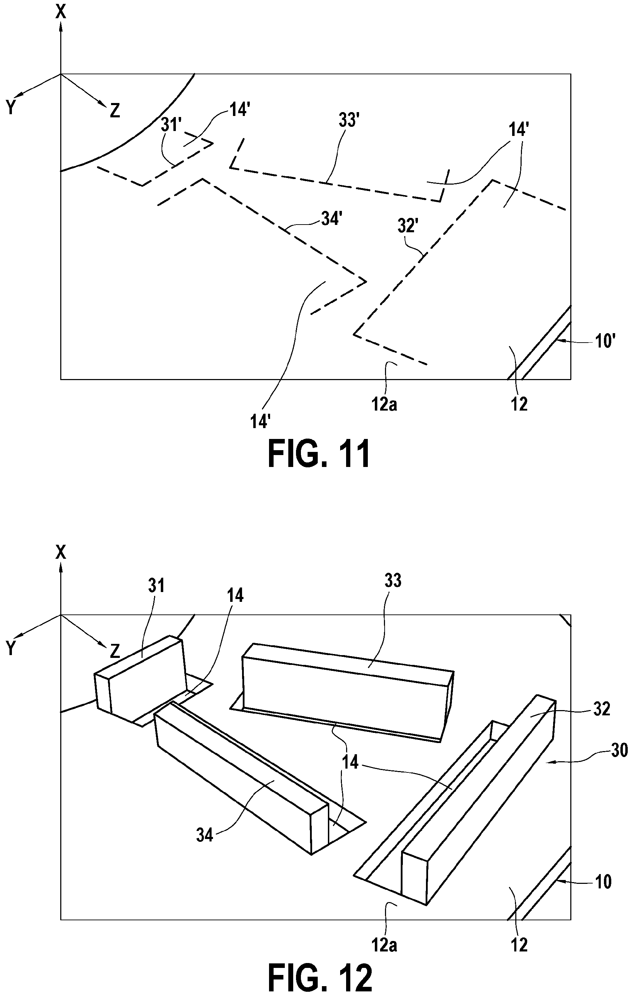

A method for forming a rotor R for an axial flux machine 1 will now be described in reference to figures 11-14. The method first comprises a step of providing a raw magnet support 10'. The raw magnet support 10' is a disk-shaped thin sheet of steel. For example, the thickness of the raw magnet support 10' is between 2 and 8 millimeters (mm).

Then, a step of forming the magnet pockets 30 consists in firstly cut portions 14' of the raw magnet support 10' along lines 31', 32', 33', 34' (figure 11), these lines having dimensions corresponding to the dimensions of the respective bracket portions 31, 32, 33, 34 to be formed. Once the portions 14' of the raw magnet support 10' have been cut along the lines 31', 32', 33', 34', said portions 14' are bent axially on the axial face 12a intended to face the stator S.

Thus, cutting the portions 14' of the raw magnet support 10', and bending said cut portions allow obtaining a plurality of bracket portions 31, 32, 33, 34 forming walls protruding from the axial face 12a, and forming the magnet pockets 30 as shown in figure 12 (only one magnet pocket 30 is visible). The remaining part of the magnet support 10 thus obtained forms the main base plate 12.

After bending the cut portions 14', holes 14 remain in the main base plate 12, these holes corresponding to the position of the portions 14' of the raw magnet support 10' before being cut and bent (it is noted that the holes 14 are not shown in figures 9, 10 and 14, in order to clarify description of these figures).

Preferably, the method comprises stamping a portion of at least one of the cut and bent portions 14', in this example the cut and bent portions 14' corresponding to the radial bracket portions 31, 32, so as to obtain stamped portions 40 forming an elongated protrusion 41 protruding towards the inside of the magnet pocket 30, and an elongated groove 42 on the side of the radial bracket portions 31, 32 opposite to the elongated protrusion 41.

This stamping step may be made for example by cold pressing manufacturing process, wherein the external face of the radial bracket portions 31, 32 is pressed towards the inside of the magnet pocket 30.

Alternatively, the stamping step may be performed before the step of forming the magnet pockets 30, that is, before cutting and bending the portions 14' of the raw magnet support 10', in the state illustrated in figure 11. Thus, when the portions 14' are cut and bent, the resulting radial bracket portions 31, 32 already have the stamped portions 40.

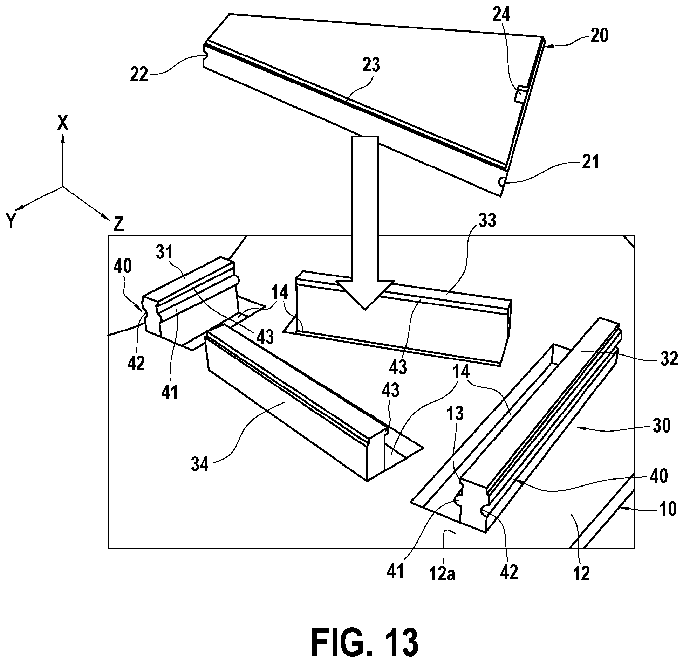

The method may also include forming axial retention shoulders 43 on each of the bracket portions 31, 32, 33, 34, by a similar cold pressing manufacturing process, or by folding the upper end of the bracket portions 31, 32, 33, 34. A portion of the resulting magnet support 12 is illustrated in figure 13.

The method may also include providing permanent magnets 20 having a first groove 21 extending on a radially outer face of each of the permanent magnets 20, and a second groove 22 extending on a radially inner face of each of the permanent magnets 20. Slots 23 may also be formed along each ridge of the upper axial end of each of the permanent magnets 20.

Preferably, the grooves 21, 22 and the slots 23 are formed by cold upsetting.

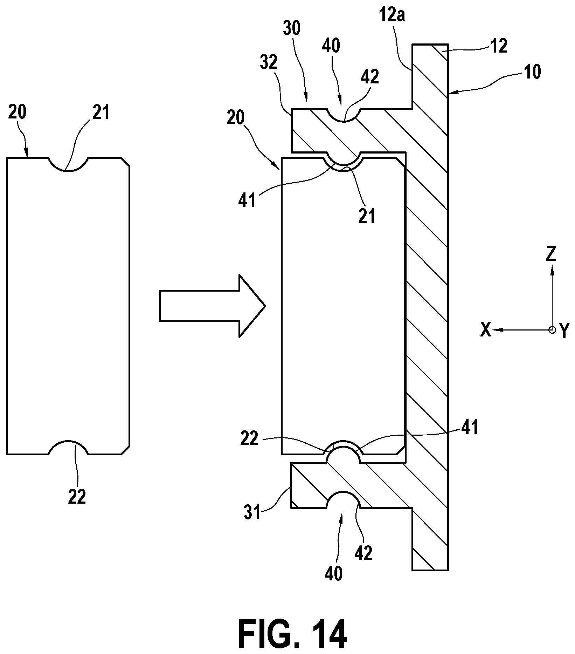

Then, the method comprises disposing a plurality of permanent magnets 20 on the axial face 12a of the main base plate 12, as illustrated in figures 13 and 14.

Figure 13 presents a perspective view of a permanent magnet 20 and a magnet pocket 30, just before insertion of the permanent magnet 20 in the magnet pocket 30.

Figure 14 presents a cut view of the rotor R, in a plan parallel to the longitudinal direction X and to the radial direction Z and crossing the radially inner bracket portion 31 and the radially outer bracket portion 32 of one magnet pocket 30.

The permanent magnets 20 (only one is visible in figures 13 and 14) are disposed on the main base plate 12 by fitting it in a corresponding one of the magnet pockets 30. More specifically, the permanent magnet 20 is positioned above the magnet pocket 30 and is manually moved axially, as schematically shown by the arrow in figures 13 and 14. The permanent magnet 20 is then inserted in the magnet pocket 30, between the four bracket portions 31, 32, 33, 34.

When the four bracket portions 31, 32, 33, 34 include the axial retention shoulder 43, and the two radial bracket portions 31, 32 include the stamped portion 40 and consequently the elongated protrusion 41, the permanent magnet 20 may be inserted by exerting a sufficient axial force on the permanent magnet 20 which triggers a slight elastic deformation of the bracket portions 31, 32, 33, 34.

When the permanent magnet 20 comes in contact with the axial face 12a of the main base plate 12, the elongated portions 41 coincide with the grooves 21, 22 of the permanent magnet 20, and the axial retention shoulders 43 overlap the slots 23. The above-mentioned slight elastic deformation can thus be released. In other words, the permanent magnets 20 are fixed on the magnet support 10 by clicking them in the magnet pockets 30. The elongated portions 41 thus cooperate with the grooves 21, 22 of the permanent magnet 20, and the axial retention shoulders 43 cooperate with the slots 23.

In addition, as visible in figure 14, the bracket portions 31, 32, 33, 34 may have an axial height lower than the axial height of the permanent magnets 20. This allows reducing the gap between the rotor R and the stator S.

The method may also comprise disposing a retention wire 50 around the magnet support 10. For that, the retention wire 50 may be elastically extended to be positioned around the magnet support 10, at an axial position corresponding to the elongated grooves 42 of the stamped portions 40 formed in each of the radially outer bracket portions 32. The elastic deformation of the retention wire 50 is then released in part, so that the retention wire 50 is brought to sit in the elongated grooves 42.

The retention wire 50 thus exerts a radially inwardly force on the radially outer bracket portions 32, due to its elastic deformation, and thus improves radial retention of the permanent magnets 20 acting against centrifugal forces when the rotor R rotates, even at high rotation speeds.

Alternatively, the method does not comprise disposing a single retention wire 50 around the magnet support 10, but may comprise disposing a retention wire 50 around each of the magnet pockets 30. For that, each of the retention wires 50 may be elastically extended to be positioned around a respective magnet pocket 30, at an axial position corresponding to the elongated grooves 42 of the stamped portions 40 formed in the radially inner bracket portion 31 and in the radially outer bracket portion 32 of that magnet pocket 30. The elastic deformation of each of the retention wires 50 is then released in part, so that the retention wire 50 is brought to sit in the elongated grooves 42 of the radially inner and outer bracket portions 31, 32.

An electric axial flux motor 1 of the present disclosure may also be obtained by assembling a stator S as previously described, and at least one rotor R obtained with a method as described above. For example, two of such rotors R may be disposed on both axial faces of the stator S and be coupled with a rotatable axial rotor shaft A.

With the rotor R and the method for forming said rotor R according to the present disclosure, it is possible to form magnet pockets 30 from a thin sheet of steel and thus obtain mechanical retention of the permanent magnets 20, only by non-machining processes, including cutting, bending and stamping. In other words, no machining of the magnet support 10 is necessary. This allows saving production energy, making the rotor lighter, and therefore, making the total energetic footprint lower, in other words better.

Furthermore, the permanent magnets 20 can be easily fixed to the magnet support 10 by clicking them into the magnet pockets 30. This does not require any adhesive, and this allows easy removal of the permanent magnets 20 at the end of the motor's life, for example via the above described prehension recesses 24. This makes recycling easier and limits negative impacts on the environment.

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense.

## Claims

1. A rotor (R) for an electric axial flux motor (1), the rotor (R) being adapted to rotate around a longitudinal axis (X) defining a longitudinal direction, and comprising:
- a plurality of permanent magnets (20),
- a magnet support (10) supporting the permanent magnets (20) and comprising a main base plate (12) and a plurality of magnet pockets (30) disposed on an axial face (12a) of the main base plate (12), each of the magnet pockets (30) holding one of the permanent magnets (20) and comprising a plurality of bracket portions (31, 32, 33, 34),
wherein each of the bracket portions (31, 32, 33, 34) are formed by a cut and bent portion of the main base plate (12) itself.

2. The rotor (R) according to claim 1, wherein the magnet support (10), including the bracket portions (31, 32, 33, 34), does not include any machining-obtained portion.

3. The rotor (R) according to claim 1 or 2, comprising at least one retention wire (50) surrounding all the magnet pockets (30).

4. The rotor (R) according to any one of claims 1 to 3, wherein at least one cut and bent portion of the main base plate (12), forming one of the bracket portions (31, 32, 33, 34), includes a stamped portion (40) forming an elongated protrusion (41) cooperating with a groove (21, 22) formed on a face of a corresponding one of the permanent magnets (20).

5. The rotor (R) according to any one of claims 1 to 4, wherein each of the magnet pockets (30) comprises four bracket portions (31, 32, 33, 34).

6. The rotor (R) according to claim 5, wherein the four bracket portions (31, 32, 33, 34) include two radial bracket portions (31, 32) disposed on both radial end sides of a corresponding one of the permanent magnets (20), and two circumferential bracket portions (33, 34) disposed on both circumferential end sides of said corresponding one of the permanent magnets (20).

7. The rotor (R) according to claim 6, wherein each of the two radial bracket portions (31, 32) includes a stamped portion (40) forming an elongated protrusion (41) cooperating with a groove (21, 22) formed on both radial end sides of the corresponding one of the permanent magnets (20).

8. The rotor (R) according to claim 7, wherein the stamped portion (40) of each of the two radial bracket portions (31, 32) forms the elongated protrusion (41) on an internal face of each of the two radial bracket portions (31, 32), and a corresponding elongated groove (42) on an opposite external face of each of the two radial bracket portions (31, 32).

9. The rotor (R) according to claims 2 and 8, wherein the at least one retention wire (50) sits in the elongated groove (42) formed on the external face of the outermost of the two radial bracket portions (31, 32) of each of the magnet pockets (30).

10. The rotor (R) according to claims 2 and 8, comprising a plurality of retention wires (50), each of the retention wires (50) sitting around a corresponding one of the magnet pockets (30) by sitting in the elongated groove (42) formed on the external face of both two radial bracket portions (31, 32).

11. The rotor (R) according to any one of claims 1 to 10, wherein an axial end of at least one of the bracket portions (31, 32, 33, 34) comprises an axial retention shoulder (43) cooperating with a slot (23) of a corresponding one of the permanent magnets (20).

12. The rotor (R) according to any one of claims 1 to 11, wherein the magnet support (10) is obtained from a disk-shaped thin sheet of steel.

13. An electric axial flux motor (1) comprising a stator (S) and at least one rotor (R) according to any one of the preceding claims, the at least one rotor (R) facing the stator (S) in the longitudinal direction.

14. A method for forming a rotor (R) for an axial flux machine (1), the method comprising:
- providing a raw magnet support (10'),
- forming magnet pockets (30) by cutting portions of the raw magnet support (10'), and bending said cut portions to form a plurality of bracket portions (31, 32, 33, 34) forming the magnet pockets (30), the remaining part of the obtained magnet support (10) forming a main base plate (12),
- disposing a plurality of permanent magnets (20) on an axial face (12a) of the main base plate (12) by fitting each of the permanent magnets (20) in a corresponding one of the magnet pockets (30).

15. The method according to claim 14, comprising stamping a portion of at least one of the cut and bent portions so as to form an elongated protrusion (41) cooperating with a groove (21, 22) formed on a face of a corresponding one of the permanent magnets (20).
